# FASCICULE DE BREVET EUROPEEN

(11) **EP 4 286 198 B1**
(45) Date de publication et mention de la délivrance du brevet: **02.04.2025**
(21) Numéro de dépôt: 23176220.4
(22) Date de dépôt: 30.05.2023
(51) Int. Cl.: B60K 15/03, B60K 13/04

(54) **VÉHICULE DOTÉ D'UN ÉCRAN THERMIQUE RENFORCÉ ENTRE UN RÉSERVOIR À CARBURANT ET UNE LIGNE D'ÉCHAPPEMENT**
FAHRZEUG MIT VERSTÄRKTEM HITZESCHILD ZWISCHEN EINEM KRAFTSTOFFTANK UND EINER ABGASLEITUNG
VEHICLE WITH REINFORCED HEAT SHIELD BETWEEN A FUEL TANK AND AN EXHAUST DUCT

(30) Priorité: 02.06.2022 FR 2205320
(43) Date de publication de la demande: 06.12.2023
(73) Titulaire: Renault s.a.s, 92100 Boulogne Billancourt (FR)
(72) Inventeur: SULA, Igor, 041402 BUCAREST (RO)

(56) Documents cités:
- FR-A1- 3 002 000
- US-A1- 2017 267 190
- US-B1- 6 401 961

## Description

La présente invention concerne un véhicule doté d'un écran thermique renforcé entre un réservoir à carburant et une ligne d'échappement.

Afin de bien comprendre le positionnement des différentes pièces impliquées dans un véhicule selon l'invention, la description est réalisée en faisant référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

Dans un souci de clarté, les expressions « un segment placé en amont du pot d'échappement » et « segment amont » sont équivalentes.

Dans certains véhicules possédant un moteur thermique, les gaz d'échappement sont évacués du moteur au moyen d'une ligne d'échappement placée sous un plancher desdits véhicules, et se terminant par un pot d'échappement allongé. Ces véhicules comportent un réservoir à carburant ayant une paroi inférieure s'étendant dans un plan sensiblement horizontal, ledit réservoir étant placé sous lesdits véhicules de sorte que la ligne d'échappement soit placée entre ladite paroi inférieure et la chaussée sur laquelle roulent ces véhicules. Puisque cette ligne d'échappement est portée à une certaine température en raison de la présence de gaz d'échappement chauds circulant dans ladite ligne d'échappement, un écran thermique est inséré entre la paroi inférieure du réservoir et cette ligne d'échappement afin d'empêcher une surchauffe dudit réservoir, qui pourrait conduire à une situation dangereuse. Or, la fonction de cet écran thermique peut être altérée au cours du temps, en raison principalement de la répétition de nombreux impacts sur ledit écran thermique, de particules telles que par exemple du gravier ou des pierres. En effet, ces impacts répétés sur l'écran thermique peuvent le déforme, voire le rompre, avec le risque qu'il ne puisse plus jouer son rôle de protection thermique du réservoir à carburant.

US 2017/267190 A1 divulgue un véhicule comprenant un réservoir à carburant, un écran thermique et une ligne d'échappement.

US 6 401 961 B1 divulgue un écran thermique qui est réalisé en trois parties distinctes.

Un véhicule selon l'invention est doté d'un écran thermique qui est inséré entre un réservoir à carburant et une ligne d'échappement, et qui est dimensionné pour résister à diverses projections de type graviers ou pierres.

L'invention a pour objet un véhicule comprenant un réservoir à carburant présentant une paroi inférieure, un écran thermique et une ligne d'échappement matérialisée par un conduit se terminant par un pot d'échappement allongé, ledit conduit présentant un segment placé en amont du pot d'échappement et un tronçon coudé reliant ledit pot d'échappement audit segment amont, l'écran thermique étant inséré entre la paroi inférieure du réservoir à carburant et la ligne d'échappement en s'étendant le long du segment amont, du tronçon coudé et du pot d'échappement.

Selon l'invention, l'écran thermique est réalisé en trois parties distinctes, dont deux parties d'extrémité s'étendent le long du segment amont et le long du pot d'échappement, et dont une partie de raccordement s'étend le long du tronçon coudé, la partie de raccordement de l'écran thermique étant fixée aux deux parties d'extrémité et étant renforcée pour résister à des impacts de différentes projections. De cette manière, grâce à la partie de raccordement renforcée, l'écran thermique est dimensionné pour résister à des impacts de différentes projections et ainsi avoir une durée de vie augmentée par rapport à celle des écrans thermiques existants. L'expression « résister à des impacts de projections » signifie que la partie de raccordement de l'écran thermique ne va, ni se déformer, ni être transpercée ou être rompue par lesdits impacts. Autrement dit, cette partie de raccordement, va conserver sa géométrie et sa structure sous l'effet des différents impacts, pour assurer pleinement et de façon constante au cours du temps, sa fonction de protection thermique vis-à-vis du réservoir à carburant. Avantageusement, la partie de raccordement adopte le profil du tronçon coudé de la ligne d'échappement en formant elle-même un coude. Pour rappel, la ligne d'échappement permet d'évacuer les gaz d'échappement en provenance des chambres de combustion d'un moteur thermique, vers l'extérieur du véhicule par l'intermédiaire du pot d'échappement. Schématiquement, cette ligne d'échappement comprend une tubulure reliant les chambres de combustion du moteur, et le pot d'échappement. L'écran thermique s'étend le long d'une partie de cette tubulure et le long du pot d'échappement en suivant étroitement le profil de cette ligne d'échappement, sans déborder inutilement de cette ligne d'échappement. Avantageusement, chacune des trois parties de l'écran thermique présente des bords relevés définissant des évidements dans lesquels sont destinés à être placée les différentes parties de la ligne d'échappement.

Selon une caractéristique possible de l'invention, la partie de raccordement de l'écran thermique forme un coude de façon à suivre étroitement le profil du tronçon coudé de la ligne d'échappement. Pour cette configuration, la partie de raccordement de l'écran thermique épouse étroitement la forme du tronçon coudé de la ligne d'échappement, sans déborder inutilement de celle-ci et de façon à assurer efficacement mais sans excès, sa fonction de protection thermique du réservoir à carburant.

Selon une caractéristique possible de l'invention, le coude formé par la partie de raccordement de l'écran thermique forme un angle droit. Pour cette configuration, il est donc supposé que le segment amont de la ligne d'échappement et le pot d'échappement sont parallèles.

Selon une caractéristique possible de l'invention, la partie de raccordement renforcée est fixée aux deux parties d'extrémité au moyen de rivets. Bien que l'écran thermique soit constitué de trois parties distinctes, il est important que ledit écran constitue une pièce résultante rigide, ayant une bonne tenue mécanique. Autrement dit, une fois que l'écran thermique a été monté, il ne subsiste aucun jeu entre ses trois parties constitutives. Des rivets permettent de fixer étroitement la partie de raccordement aux deux parties d'extrémité de l'écran thermique.

Selon une caractéristique possible de l'invention, la partie de raccordement est dans la parfaite continuité des deux parties d'extrémité de manière à faire apparaitre un écran thermique sans aspérités. L'écran thermique ne présente ainsi aucun élément en saillie, susceptible d'encombrer inutilement cet écran thermique et susceptible de dévier des projections vers des équipements placés sous la caisse du véhicule, comme par exemple, le réservoir à carburant.

Selon une caractéristique possible de l'invention, la pièce de raccordement est configurée pour être indéformable sous l'effet des impacts de projections et pour assurer une certaine raideur à l'écran thermique. Cette pièce de raccordement joue un rôle clé au sein de l'écran thermique :
- elle permet d'assure une certaine raideur à l'écran thermique et donc une certaine tenue mécanique de celui-ci afin notamment qu'il ne se déforme pas à la moindre sollicitation,
- elle permet de résister à des impacts de diverses projections, et de rendre plus robuste cet écran thermique vis-à-vis de ces projections.

Selon une caractéristique possible de l'invention, la partie de raccordement de l'écran thermique présente des zones de chevauchement avec les deux parties d'extrémités dudit écran thermique. La présence de ces zones de chevauchement entre la partie de raccordement et les parties d'extrémité, contribue à rendre l'écran thermique encore plus rigide, avec une meilleure tenue mécanique sous le véhicule.

Selon une caractéristique possible de l'invention, le segment amont de la ligne d'échappement et le pot d'échappement sont parallèles et s'étendent suivant un axe longitudinal X du véhicule, les deux parties d'extrémité de l'écran thermique étant parallèles. De cette manière, le profil de l'écran thermique s'adapte rigoureusement au profil de la ligne d'échappement.

L'invention a pour autre objet un écran thermique pour la réalisation d'un véhicule selon l'invention.

Selon l'invention, l'écran thermique est réalisé en trois parties distinctes, comprenant deux parties d'extrémité et une partie de raccordement fixée aux deux parties d'extrémité, la partie de raccordement formant un coude et étant renforcée pour résister à des impacts de différentes projections. Le renforcement de la partie de raccordement peut être réalisé :
- soit en choisissant directement un matériau résistant et indéformable pour la partie de raccordement, et apte à résister aux impacts de diverses projections,
- soit en adjoignant à la partie de raccordement une couche ou une feuille constituée d'un matériau résistant et indéformable.

L'invention a pour autre objet un procédé de fixation d'un écran thermique pour la réalisation d'un véhicule selon l'invention.

Selon l'invention, le procédé comprend les étapes suivantes :
- une étape de fixation de la partie de raccordement renforcée aux deux parties d'extrémité pour obtenir un écran thermique continu et présentant un coude,
- une étape de fixation dans le véhicule de l'écran thermique obtenu entre la face inférieure du réservoir de carburant et la ligne d'échappement de sorte que ledit écran thermique suive étroitement le profil de la ligne d'échappement.

De cette manière, l'écran thermique en trois parties peut être assemblé à part, avant d'être acheminé vers une chaine de montage d'un véhicule où il sera monté sur le véhicule.

Un véhicule selon l'invention a l'avantage de posséder un écran thermique destiné à empêcher une surchauffe d'un réservoir à carburant, et qui est résistant aux impacts de diverses projections tout en demeurant léger et peu encombrant. L'écran thermique a de plus l'avantage de suivre étroitement le profil de la ligne d'échappement placée sous le véhicule, tout en possédant une certaine raideur, de façon à empêcher que la source de chaleur constituée par la ligne d'échappement ne se répande jusqu'au réservoir à carburant.

On donne ci-après une description détaillée d'un mode de réalisation préféré d'un véhicule et d'un écran thermique selon l'invention, en se référant aux figures suivantes :
[Fig. 1] est une vue du dessous d'un véhicule selon l'invention, montrant un écran thermique inséré entre le réservoir à carburant et la ligne d'échappement,
[Fig. 2] est une vue de face d'un écran thermique selon l'invention.

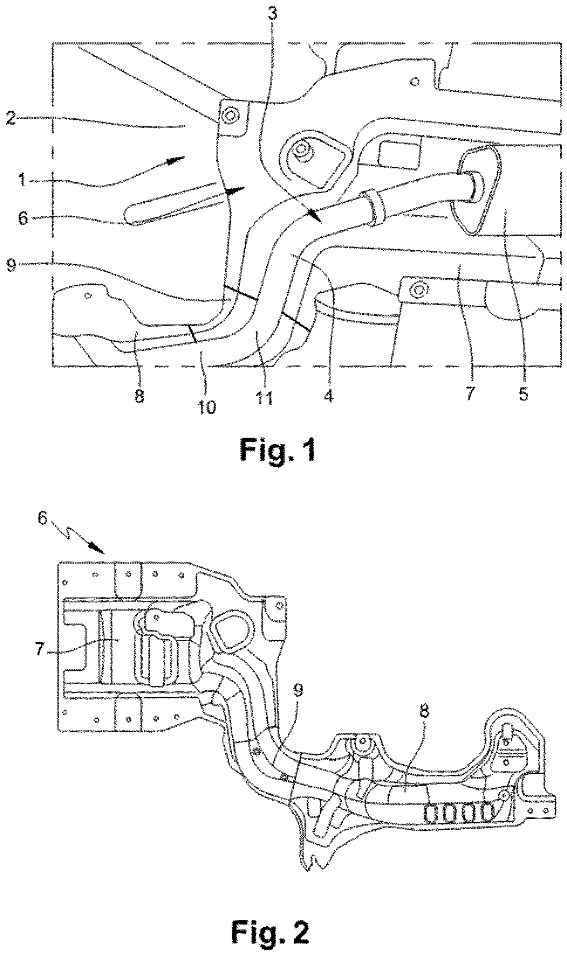

En se référant à la figure 1, certains véhicules possèdent un réservoir 1 à carburant placé sous un plancher, de sorte qu'une paroi inférieure 2 de ce réservoir 1 se retrouve en vis-à-vis de la chaussée sur laquelle évoluent ces véhicules. De façon avantageuse, cette paroi inférieure 2 qui matérialise la partie la plus basse du réservoir à carburant 1, s'étend dans un plan qui est sensiblement horizontal. Ces véhicules possédant un moteur thermique, sont dotés d'une ligne d'échappement 3 permettant d'évacuer des gaz d'échappement depuis des chambres de combustion de ce moteur thermique vers l'extérieur desdits véhicules. Cette ligne d'échappement 3 comprend schématiquement une tubulure 4 prenant naissance au niveau des chambres de combustion du moteur thermique, et qui se termine par un pot d'échappement 5. Cette ligne d'échappement 3 est disposée dans le véhicule de sorte qu'elle passe sous la paroi inférieure 2 du réservoir 1 à carburant. Puisque les gaz d'échappement qui sont évacués par la ligne d'échappement 3 sont portés à une certaine température, cette ligne d'échappement 3 est susceptible de créer une surchauffe du réservoir 1 à carburant, risquant d'engendrer des événements redoutés tels que par exemple un incendie ou un éclatement dudit réservoir à carburant 1. Afin d'empêcher la survenance de tels événements, un écran thermique 6 est inséré entre la paroi inférieure 2 du réservoir 1 à carburant et la ligne d'échappement 3, afin d'empêcher tout transfert de chaleur entre ladite ligne d'échappement 3 et ledit réservoir à carburant 1.

Or, un tel écran thermique 6 qui est placé sous le véhicule va être soumis à des impacts de diverses projections en provenance de la route, et risque donc d'être endommagé, au point de ne plus pouvoir assurer sa fonction de protection thermique vis-à-vis du réservoir à carburant 1.

En se référant à la figure 2, afin de remédier à ce problème, un véhicule selon l'invention est doté d'un écran thermique 6 qui est réalisé en trois parties, comprenant deux parties d'extrémité 7, 8 et une partie de raccordement 9 reliant lesdites deux parties d'extrémité 7, 8.

En se référant à la figure 1, la ligne d'échappement 3 comprend un segment amont 10 sensiblement rectiligne, s'étendant suivant un axe longitudinal X du véhicule, ledit segment amont 10 étant relié au pot d'échappement 5 par un tronçon coudé 11. Le pot d'échappement 5 est allongé et est disposé sous le véhicule de manière à s'étendre le long d'un axe longitudinal X du véhicule, le tronçon coudé 11 formant un angle droit.

En se référant aux figures 1 et 2, une partie d'extrémité 7 de l'écran thermique 6 est insérée entre la paroi inférieure 2 du réservoir 1 à carburant et le pot d'échappement 5, et l'autre partie d'extrémité 8 est inséré entre ladite paroi inférieure 2 et le segment amont 10 de la ligne d'échappement 3. La partie de raccordement 9 quant à elle est insérée entre la paroi inférieure 2 du réservoir 1 à carburant et le tronçon coudé 11 de la ligne d'échappement 3. Les deux parties d'extrémité 7, 8 adoptent chacune le profil de la zone 5, 10 de la ligne d'échappement 3 contre laquelle elles sont placées, au point d'enserrer étroitement lesdites zones 5, 10. Ces deux parties d'extrémité 7, 8 sont assimilables à des moules épousant étroitement la forme de ces zones 5, 10. Elles sont donc chacune délimitées par une multiplicité de petits reliefs recouvrant des petits reliefs de ces zones 5, 10. Pour rappel, ces zones sont représentées par le segment amont 10 et le pot d'échappement 10.

En se référant à la figure 2, la partie de raccordement 9 de l'écran thermique 6 a une forme coudée à angle droit, pour suivre étroitement le profil du tronçon coudé 11 de la ligne d'échappement 3. Cette partie de raccordement 9 est fixée aux deux parties d'extrémité 7, 8 au moyen de rivets. Afin d'assurer une certaine raideur de l'écran thermique résultant 6, la partie de raccordement 9 présente des zones de chevauchement avec les deux parties d'extrémité 7, 8 dudit écran thermique 6. Par rapport aux deux parties d'extrémité 7, 8, la partie de raccordement 9 possède une faible largeur, lui permettant de suivre le profil du tronçon coudé 11 de la ligne d'échappement 3 sans déborder dudit tronçon 11 coudé.

La partie de raccordement 9 présente la particularité d'être renforcée pour pouvoir résister à de potentiels impacts de projections en provenance de la route. Le terme « résister » signifie « sans se déformer et sans se rompre ». Autrement dit, sous l'effet de ces impacts, cette partie de raccordement 9 de l'écran thermique 6 va conserver son intégrité structurelle, sans perdre de son efficacité vis-à-vis de sa fonction de protection thermique du réservoir 1 à carburant.

Ce renforcement de la partie de raccordement 9 peut s'effectuer :
- soit en choisissant directement pour cette partie de raccordement 9 un matériau résistant susceptible de résister aux impacts de projections,
- soit en ajoutant à cette partie de raccordement 9, initialement réalisée par exemple dans le même matériau que celui des deux parties d'extrémité 7, 9, une couche d'un matériau résistant.

Un procédé de fixation d'un écran thermique 6 en trois parties 7, 8, 9 dans un véhicule, comprend les étapes suivantes :
- une étape de fixation de la partie de raccordement 9 renforcée aux deux parties d'extrémité 7, 8 pour obtenir un écran thermique 6 continu et présentant un coude, cette étape de fixation ayant lieu après avoir établi des zones de chevauchement entre la partie de raccordement 9 et les deux parties d'extrémité 7, 8,
- une étape de fixation dans le véhicule de l'écran thermique 6 obtenu à l'étape précédente entre la face inférieure 2 du réservoir 1 à carburant et la ligne d'échappement 3, de sorte que ledit écran thermique 6 suive étroitement le profil de la ligne d'échappement 3.

Il est à préciser que l'écran thermique 6 obtenu par la fixation des trois partie 7, 8, 9, est rigide et indéformable. Au sein de cet écran thermique 6, la partie de raccordement 9 a une double fonction :
- assurer une certaine raideur à l'écran thermique 6 puisque cette partie de raccordement est renforcée,
- empêcher que l'écran thermique 6 ne soit endommagé sous l'effet des impacts multiples de projections en provenance de la route, telles que par exemple des pierres, du gravier, etc.

## Revendications

1. Véhicule comprenant un réservoir (1) à carburant présentant une paroi inférieure (2), un écran thermique (6) et une ligne d'échappement (3) matérialisée par un conduit (4) se terminant par un pot d'échappement (5) allongé, ledit conduit (4) présentant un segment (10) placé en amont du pot d'échappement (5) et un tronçon coudé (11) reliant ledit pot d'échappement (5) audit segment (10) amont, l'écran thermique (6) étant inséré entre la paroi inférieure (2) du réservoir (1) à carburant et la ligne d'échappement (3) en s'étendant le long du segment amont (10), du tronçon coudé (11) et du pot d'échappement (5), **caractérisé en ce que** l'écran thermique (6) est réalisé en trois parties distinctes (7, 8, 9), dont deux parties d'extrémité (7, 8) s'étendent le long du segment amont (10) et le long du pot d'échappement (5), et dont une partie de raccordement (9) s'étend le long du tronçon coudé (11), et **en ce que** la partie de raccordement (9) de l'écran thermique (6) est fixée aux deux parties d'extrémité (7, 8) et est renforcée pour résister à des impacts de différentes projections.

2. Véhicule selon la revendication 1, **caractérisé en ce que** la partie de raccordement (9) de l'écran thermique (6) forme un coude de façon à suivre étroitement le profil du tronçon coudé (11) de la ligne d'échappement (3).

3. Véhicule selon la revendication 2, **caractérisé en ce que** le coude formé par la partie de raccordement (9) de l'écran thermique (6) forme un angle droit.

4. Véhicule selon l'une quelconque des revendications 1 à 3, **caractérisé en ce que** la partie de raccordement (9) renforcée est fixée aux deux parties d'extrémité (7, 8) au moyen de rivets.

5. Véhicule selon l'une quelconque des revendications 1 à 4, **caractérisé en ce que** la partie de raccordement (9) est dans la parfaite continuité des deux parties d'extrémité (7, 8) de manière à faire apparaitre un écran thermique sans aspérités.

6. Véhicule selon l'une quelconque des revendications 1 à 5, **caractérisé en ce que** la pièce de raccordement (9) est configurée pour être indéformable sous l'effet des impacts de projections et pour assurer une certaine raideur à l'écran thermique (6).

7. Véhicule selon l'une quelconque des revendications 1 à 6, **caractérisé en ce que** la partie de raccordement (9) de l'écran thermique (6) présente des zones de chevauchement avec les deux parties d'extrémités (7, 8) dudit écran thermique (6).

8. Véhicule selon l'une quelconque des revendications 1 à 6, **caractérisé en ce que** le segment amont (10) de la ligne d'échappement (3) et le pot d'échappement (5) sont parallèles et s'étendent suivant un axe longitudinal X du véhicule, et **en ce que** les deux parties d'extrémité (7, 8) de l'écran thermique (6) sont parallèles.

9. Ecran thermique (6) pour la réalisation d'un véhicule selon l'une quelconque des revendications 1 à 8, **caractérisé en ce qu'**il est réalisé en trois parties distinctes (7, 8, 9), comprenant deux parties d'extrémité (7, 8) et une partie de raccordement (9) fixée auxdites deux parties d'extrémité (7, 8), et **en ce que** la partie de raccordement (9) forme un coude et est renforcée pour résister à des impacts de différentes projections.

10. Procédé de fixation d'un écran thermique pour la (6) réalisation d'un véhicule selon l'une quelconque des revendications 1 à 8, **caractérisé en ce qu'**il comprend les étapes suivantes :
- une étape de fixation de la partie de raccordement (9) renforcée aux deux parties d'extrémité (7, 8) pour obtenir un écran thermique (6) continu et présentant un coude,
- une étape de fixation dans le véhicule de l'écran thermique (6) obtenu entre la face inférieure (2) du réservoir (1) à carburant et la ligne d'échappement (3) de sorte que ledit écran thermique (6) suive étroitement le profil de la ligne d'échappement (9).

## Patentansprüche

1. Fahrzeug, umfassend einen Kraftstofftank (1), aufweisend eine Bodenwand (2), einen Hitzeschild (6) und eine Abgasleitung (3), die durch einen Kanal (4) gebildet wird, der in einem länglichen Auspufftopf (5) endet, wobei der Kanal (4) einen Abschnitt (10) aufweist, der dem Auspufftopf (5) vorgelagert angeordnet ist und ein gebogenes Teilstück (11), das den Auspufftopf (5) mit dem vorgelagerten Abschnitt (10) verbindet, wobei der Hitzeschild (6) zwischen der Bodenwand (2) des Kraftstofftanks (1) und der Abgasleitung (3) eingesetzt ist und sich entlang des vorgelagerten Abschnitts (10), des gebogenen Teilstücks (11) und des Auspufftopfs (5) erstreckt, **dadurch gekennzeichnet, dass** der Hitzeschild (6) aus drei getrennten Teilen (7, 8, 9) besteht, von denen sich zwei Endteile (7, 8) entlang des vorgelagerten Abschnitts (10) und entlang des Auspufftopfs (5) erstrecken und von denen sich ein Anschlussteil (9) entlang des gebogenen Teilstücks (11) erstreckt, und dass das Anschlussteil (9) des Hitzeschilds (6) an den beiden Endteilen (7, 8) befestigt und verstärkt ist, um dem Auftreffen von verschiedenen Spritzern standzuhalten.

2. Fahrzeug nach Anspruch **1, dadurch gekennzeichnet, dass** das Anschlussteil (9) des Hitzeschilds (6) einen Bogen bildet, um dem Profil des gebogenen Teilstücks (11) der Abgasleitung (3) genau zu folgen.

3. Fahrzeug nach Anspruch 2, **dadurch gekennzeichnet, dass** der von dem Anschlussteil (9) des Hitzeschilds (6) gebildete Bogen einen rechten Winkel bildet.

4. Fahrzeug nach einem der Ansprüche 1 bis 3, **dadurch gekennzeichnet, dass** das verstärkte Anschlussteil (9) an den beiden Endteilen (7, 8) mittels Nieten befestigt ist.

5. Fahrzeug nach einem der Ansprüche 1 bis 4, **dadurch gekennzeichnet, dass** das Anschlussteil (9) sich in perfekter Durchgängigkeit mit den beiden Endteilen (7, 8) befindet, so dass ein Hitzeschild ohne Unebenheiten entsteht.

6. Fahrzeug nach einem der Ansprüche 1 bis 5, **dadurch gekennzeichnet, dass** das Verbindungsstück (9) so konfiguriert ist, dass es unter der Wirkung des Auftreffens von Spritzern nicht verformbar ist und dem Hitzeschild (6) eine gewisse Steifigkeit verleiht.

7. Fahrzeug nach einem der Ansprüche 1 bis 6, **dadurch gekennzeichnet, dass** das Anschlussteil (9) des Hitzeschilds (6) mit den beiden Endteilen (7, 8) des Hitzeschilds (6) überlappende Bereiche aufweist.

8. Fahrzeug nach einem der Ansprüche 1 bis 6, **dadurch gekennzeichnet, dass** der vorgelagerte Abschnitt (10) der Abgasleitung (3) und der Auspufftopf (5) parallel sind und sich entlang einer Längsachse X des Fahrzeugs erstrecken, und dass die beiden Endteile (7, 8) des Hitzeschilds (6) parallel sind.

9. Hitzeschild (6) zur Herstellung eines Fahrzeugs nach einem der Ansprüche 1 bis 8, **dadurch gekennzeichnet, dass** er aus drei getrennten Teilen (7, 8, 9) besteht, die zwei Endteile (7, 8) und ein Anschlussteil (9) umfassen, das an den beiden Endteilen (7, 8) befestigt ist, und dass das Anschlussteil (9) einen Bogen bildet und verstärkt ist, um dem Auftreffen von verschiedenen Spritzern standzuhalten.

10. Verfahren zur Befestigung eines Hitzeschilds für die (6) Herstellung eines Fahrzeugs nach einem der Ansprüche 1 bis 8, **dadurch gekennzeichnet, dass** es die folgenden Schritte umfasst:
- einen Schritt der Befestigung des verstärkten Anschlussteils (9) an den beiden Endteilen (7, 8), um einen durchgehenden Hitzeschild (6) zu erhalten, der einen Bogen aufweist,
- einen Schritt zur Befestigung des so erhaltenen Hitzeschilds (6) in dem Fahrzeug zwischen der Bodenseite (2) des Kraftstofftanks (1) und der Abgasleitung (3), so dass der Hitzeschild (6) eng dem Profil der Abgasleitung (9) folgt.

## Claims

1. Vehicle comprising a fuel tank (1) having a bottom wall (2), a heat shield (6) and an exhaust pipe (3) formed by a duct (4) terminating in an elongated exhaust silencer (5), said duct (4) having a segment (10) arranged upstream of the exhaust silencer (5) and an elbow section (11) connecting said exhaust silencer (5) to said upstream segment (10), the heat shield (6) being inserted between the bottom wall (2) of the fuel tank (1) and the exhaust pipe (3) and extending along the upstream segment (10), the elbow section (11) and the exhaust silencer (5), **characterized in that** the heat shield (6) is made of three distinct parts (7, 8, 9), two end parts (7, 8) of which extend along the upstream segment (10) and along the exhaust silencer (5), and a connecting part (9) of which extends along the elbow section (11), and **in that** the connecting part (9) of the heat shield (6) is fastened to both end parts (7, 8) and is reinforced to withstand impacts of various projected bodies.

2. Vehicle according to Claim 1, **characterized in that** the connecting part (9) of the heat shield (6) forms an elbow so as to closely follow the profile of the elbow section (11) of the exhaust pipe (3).

3. Vehicle according to Claim 2, **characterized in that** the elbow formed by the connecting part (9) of the heat shield (6) forms a right angle.

4. Vehicle according to any one of Claims 1 to **3, characterized in that** the reinforced connecting part (9) is fastened to both end parts (7, 8) using rivets.

5. Vehicle according to any one of Claims 1 to 4, **characterized in that** the connecting part (9) is in perfect continuity with the two end parts (7, 8) so as to provide a heat shield with no irregularities.

6. Vehicle according to any one of Claims 1 to 5, **characterized in that** the connecting part (9) is designed to be non-deformable under the effect of the impacts of projected bodies and to provide the heat shield (6) with a given stiffness.

7. Vehicle according to any one of Claims 1 to **6, characterized in that** the connecting part (9) of the heat shield (6) has overlapping zones with both end parts (7, 8) of said heat shield (6).

8. Vehicle according to any one of Claims 1 to **6, characterized in that** the upstream segment (10) of the exhaust pipe (3) and the exhaust silencer (5) are parallel and extend along a longitudinal axis X of the vehicle, and **in that** the two end parts (7, 8) of the heat shield (6) are parallel.

9. Heat shield (6) for the production of a vehicle according to any one of Claims 1 to **8, characterized in that** it is made of three distinct parts (7, 8, 9), comprising two end parts (7, 8) and a connecting part (9) fastened to said two end parts (7, 8), and **in that** the connecting part (9) forms an elbow and is reinforced to withstand impacts from various projected bodies.

10. Method of fastening a heat shield (6) for the production of a vehicle according to any one of Claims 1 to 8, **characterized in that** it comprises the following steps:
- a step of fastening the reinforced connecting part (9) to the two end parts (7, 8) to obtain a continuous heat shield (6) with an elbow,
- a step of fastening the obtained heat shield (6) in the vehicle between the bottom face (2) of the fuel tank (1) and the exhaust pipe (3) so that said heat shield (6) closely follows the profile of the exhaust pipe (9).
